Europäisches Patentamt

European Patent Office

Office européen des brevets

(11) Publication number: **0 230 377**
**A2**

# EUROPEAN PATENT APPLICATION

(21) Application number: **87300309.9**

(22) Date of filing: **14.01.87**

(51) Int. Cl.⁴: **F 22 B 37/00**
**G 21 C 17/00**

(30) Priority: **15.01.86 US 819087    02.09.86 US 902807**

(43) Date of publication of application:
**29.07.87    Bulletin 87/31**

(84) Designated Contracting States:
**BE CH ES FR GB IT LI SE**

(71) Applicant: **WESTINGHOUSE ELECTRIC CORPORATION**
**Westinghouse Building Gateway Center**
**Pittsburgh Pennsylvania 15235 (US)**

(72) Inventor: **Klug, Ralph Wayne**
**28 Crystal Drive**
**Oakmont, PA 15139 (US)**

**Toler, Charles Edward**
**465 Guylyn Drive**
**Pittsburgh, PA 15235 (US)**

**Rylatt, John Anthony**
**2363 Haymaker Road**
**Monroeville, PA 15146 (US)**

**Minogue, Patrick Michael**
**27B Bethany Drive**
**Pittsburgh, PA 15215 (US)**

(74) Representative: **van Berlyn, Ronald Gilbert**
**23, Centre Heights**
**London, NW3 6JG (GB)**

(54) Remote inspection device transport system.

(57) A transport system for an inspection device that includes a flexible controllable end effector for carrying a gripping device. A hollow flexible conduit of the transport system houses control cables for the effector. A rotatable deflector assembly helps guide the end effector as it enters the steam generator using a rotatable deflector channel and an extension. A drive assembly provides axial movement control for the end effector allowing easy insertion and retrieval. The flexible conduit is taken up from and gathered by a conduit basket outside the steam generator. The end effector includes a probe and a gripper which can be angularly rotated for manipulation.

*FIG. 2*

**Description**

REMOTE INSPECTION DEVICE TRANSPORT SYSTEM

## BACKGROUND OF THE INVENTION

Field of the Invention:

The present invention is directed to a remote inspection device and a transport system for a remote inspection device and more particularly, to a transport system which will move an inspection device into a relatively inaccessible portion of a nuclear steam generator and allow the inspection device to be driven and manipulated once it is inside.

Description of the Related Art:

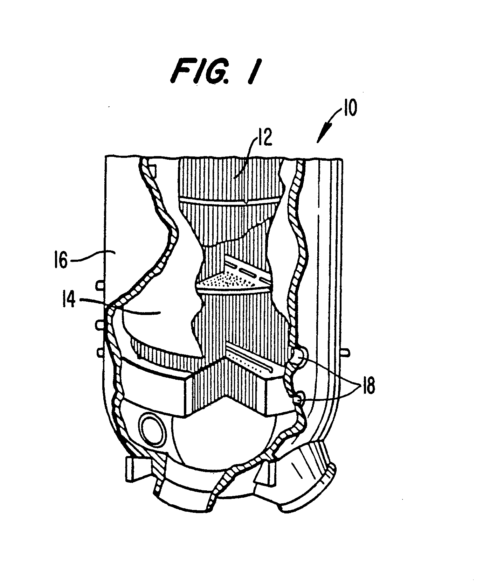

An operating nuclear steam generator is constantly transferring heat from a heat source fluid to a drive fluid such as water converted into steam to drive a steam turbine. The fluid from the heat source enters the steam generator, illustrated in Fig. 1, and passes through U-shaped tubes grouped in a tube bundle 12. The tube bundle 12 is surrounded by a tube wrapper 14 and then by a steam generator shell 16. A space exists between the tube wrapper 14 and the outer shell 16. Impurities in the drive fluid can be deposited as sludge at the bottom of the tube bundle 12 below the tube wrapper 14 during operation. In addition, objects lost during steam generator construction, such as welding rods, can become dislodged and fall between the tube wrapper 14 and the outer shell 16 into an annulus which is approximately 2 to 3 inches wide. It is necessary during periodic inspections to inspect the 4 to 6 inch cavity which exists around the tube bundle 12 and below the tube wrapper 14 because the foreign objects create a threat to the integrity of the tube bundle 12 and, as a result, should be removed, if possible. The only access into the space between the tube wrapper 14 and the outer shell 16 are handholes 18 approximately 5-6 inches in diameter and approximately 12-24 inches above a tube sheet through which the tubes pass. It is difficult to insert an inspection device, such as a miniature camera, etc., into the 2 to 3 inch space between the tube wrapper 14 and outer shell 16, and then guide the camera around the bottom periphery of the tube bundle for inspection purposes. The end of the inspection device can also include manipulation devices such as a gripper which will allow foreign objects in the cavity to be removed. The source fluid passing through the tube bundle 12 carries radioactive contaminants, and human exposure to the small amount of the radiation passing through the handholes 18 must be kept at a minimum. Devices which require manipulation by a human through the handhole for inspecting the cavity around the bottom of the tube bundle thus have serious disadvantages.

While certain inspection and maintenance devices for steam generators are known, none of these devices are adapted to be able to search between the tubes of a steam generator and also retrieve loose objects in the narrow spaces between the tubes. For example, Creek et al. U.S. Patent No. 4,515,747 discloses a remotely operated maintenance and inspection device which includes a wheeled transporter which is inserted through a handhole opening in the shell of a steam generator and positioned on the tube sheet between the tube bundle and the inner wall of the shell. A cable is then attached to each end of the transporter and extends around the bundle of tubes and out through the handhole opening whereby suitable power means may be utilized to move the transporter around the periphery of the tube bundle. A TV camera may be mounted on the transporter to inspect the tubes of the bundle. A sludge lance also may be mounted upon the transporter to break up and liquify deposits at the base of the tubes of the bundle. The Creek et al. device, however, does not provide any means for employing a device which can be manipulated through the bundle of tubes to pick up objects on the tube sheet. Moreover, since the transporter and its associated cable contact the tubes of the tube bundle, there is a risk that the tubes might be damaged during operation of the device.

Another type of prior art steam generator inspection device is disclosed in McShane et al. U.S. Patent No. 4,355,536. This device basically comprises a probe mounted on the end of a ribbon-like probe carrier which is fed into the shell of a steam generator through the handhole opening and deflected by a carriage placed in alignment with a lane of tubes whereby the probe may measure the accumulation of sludge adjacent the bottom of the tubes. No means is provided on the device, however, for picking up and retrieving objects from the tube sheet.

Accordingly, a need still exists for a device capable of inspecting or searching the tube sheet in the areas between the vertical tubes and which also is adapted to pick up any loose objects between the tubes on the tube sheet.

## SUMMARY OF THE INVENTION

It is an object of the present invention to provide a remote controlled inspection device and a transport and manipulation system therefor, which minimize human exposure to radiation emitted at steam generator handholes.

The apparatus described herein provides easy control of insertion and orientation of an inspection device in a steam generator, allows easy control of the direction and the travel of the inspection device, provides an inspection device drive system which will allow easy attachment of the inspection device to a drive conduit for driving the inspection device, and includes an arrangement to provide conduit drive forces from spatially fixed locations.

The invention in its broad form resides in a drive system for a remotely operated inspection probe device for inspecting an inspection area, and retrieving objects in a steam generator having an outer cylindrical shell, a horizontal tube sheet adjacent the lower end of said shell, a bundle of vertical tubes supported by said tube sheet, a wrapper barrel surrounding said tubes extending from the upper portion of said shell downwardly to a predetermined point above said tube sheet to form an annulus inside said shell and an opening through said shell to said system comprising: a flexible conduit attached to the inspection probe device; guide means for guiding the inspection probe device and flexible conduit into the inspection area; characterized by motion control means for controlling the movement of the flexible conduit and inspection device into and out of the inspection area, and for controlling orientation of the inspection probe device by rotating the flexible conduit; and conduit collection and inspection device control means for respectively collecting the flexible conduit and controlling the inspection device.

The transport system described hereinafter includes a hollow flexible conduit through which control cables for the end effector pass. A deflector assembly helps guide the end effector and conduit as they enter the steam generator. A drive assembly provides axial movement control for the end effector through the conduit allowing easy insertion and retrieval. The drive assembly also provides orientation control to allow the end effector to be rotated by rotating the conduit. The flexible conduit is taken up from and gathered by a conduit basket outside the steam generator.

The present invention also provides a device for searching and retrieving objects between the tubes on a tube sheet in a steam generator which device is small enough in size to be placed in operating position inside the shell of the generator without dismantling any parts of the generator.

Described herein is a simple reliable device for searching and retrieving objects on the tube sheet between the tubes of a steam generator without risk of damage to the tubes.

There is described herein a device for searching and retrieving objects in a nuclear steam generator wherein the generator includes an outer cylindrical shell, a horizontal tube sheet adjacent the lower end of the shell, a bundle of vertical tubes supported by the tube sheet, a wrapper barrel surrounding the tubes extending from the upper portion of the shell downwardly to a predetermined point above the tube sheet to form an annulus inside the shell and an opening called a handhole through the shell to the annulus. The search and retrieval device includes a sled adapted to be passed through the shell opening and down through the annulus to the surface of the tube sheet. A flexible tube is connected at one end to the sled and has its other end extending out through the shell opening. The tube is of sufficient length to be freely movable into and out of the shell opening to move the sled along the periphery of the tube sheet. A probe such as a TV camera or a fiberscope and a gripper are mounted on the sled for searching and retrieving objects. Adjusting means including a rotatable turret are mounted on the sled for changing the operating positions of the probe and the gripper so that they may be operated between the tubes on the tube sheet. Control means extend from outside the shell through the flexible tube for operating the probe, the gripper and the adjusting means.

BRIEF DESCRIPTION OF THE DRAWINGS

A more detailed understanding of the invention can be had from the following description of a preferred embodiment, given by way of example and to be studied in conjunction with the accompanying drawings wherein:

Fig. 1 illustrates a bottom portion of a steam generator to which the present invention is applied;

Fig. 2 depicts, in a side view, the major components of the transport system in accordance with an embodiment of the present invention;

Figs. 3 and 4 illustrate an end effector 100 transported by an embodiment of the present invention;

Figs. 5 and 6 depict a deflector assembly 200 in accordance with the present invention;

Fig. 7 is an exploded view illustrating the gear motions in a drive assembly 400 of the present invention which provide axial and rotational motion to end effector 100 through conduit 300;

Fig. 8 is a side view of the drive assembly 400 in accordance with the present invention;

Fig. 9 is an end view of the drive assembly 400 of the present invention;

Figs. 10-12 illustrate the components of a drive box 430 of the present invention;

Fig. 13 illustrates additional components of the present invention in an exploded view that continues the view of Fig. 7;

Fig. 14 illustrates the conduit tension assembly of the present invention;

Fig. 15 is an elevational cross-sectional view of a lower portion of the shell of a conventional nuclear steam generator showing the search and retrieval device of a preferred embodiment, extending through the handhole opening down to the periphery of the tube sheet;

Fig. 16 is a cross-sectional view, taken along line 16-16 in Fig. 15, showing a top view of the search and retrieval device of the present invention in position at the periphery of the tube sheet;

Fig. 17 is an enlarged top plan view, partially in cross-section, of the sled of the present invention illustrating the manner in which the controls for the probe and the gripper extend through the turret and the gear mechanism for rotating the turret;

Fig. 18 is a cross-sectional view of the sled taken along line 18-18 of Fig. 17; and

Fig. 19 is a cross-sectional view taken along line 19-19 of Fig. 17 illustrating the details of the turret.

DESCRIPTION OF THE PREFERRED EMBODIMENTS

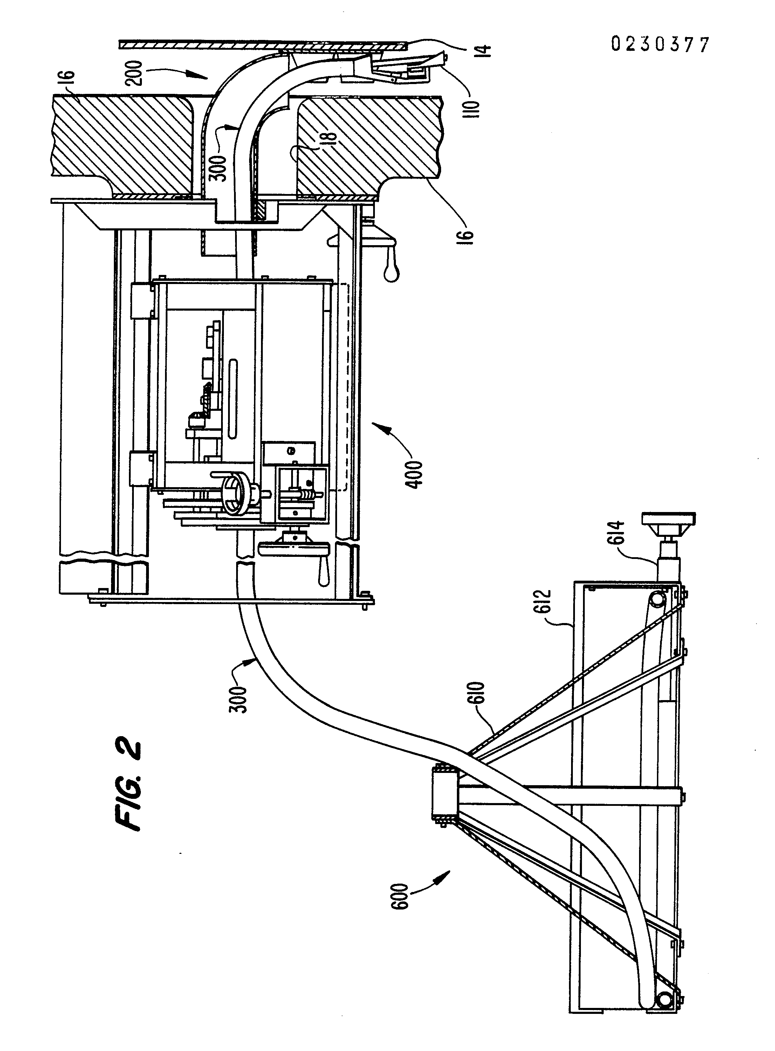

A remote inspection device transport system, in accordance with the present invention, allows easy insertion of and control of an end effector 100 inserted into a steam generator between the tube wrapper 14 and the steam generator shell 16, as illustrated in Fig. 2. The end effector assembly 100 can have mounted thereon a fiberscope or a camera with which inspection personnel can inspect the cavity around the bottom of the tube bundle. The end effector assembly 100 can also carry devices such as grippers for retrieving objects deposited in the cavity. The end effector 100 is inserted into the space between the tube wrapper 14 and steam generator shell 16 by a deflector assembly 200 passing through the handhole 18 in the steam generator shell 16. The deflector assembly 200 forces the end effector 100 down toward the bottom of the steam generator shell 16 and can be used to guide the end effector 100 diagonally, so that the end effector 100 will travel around the circumference of the bottom of the tube bundle 12 for an inspection. The end effector 100 is attached to a hollow one inch drive conduit 300 of stainless steel with a 3 inch bending radius and available from Calco Manufacturing Co. The hollow drive conduit 300 allows control cables as well as inspection cables such as a fiber optic inspection cable to pass therethrough unobstructed. The drive conduit 300 is moved axially and rotationally by a drive assembly 400 which removably abuts the deflector assembly 200. The conduit 300 is taken out of and gathered by a conduit basket assembly 600 which automatically coils the conduit 300.

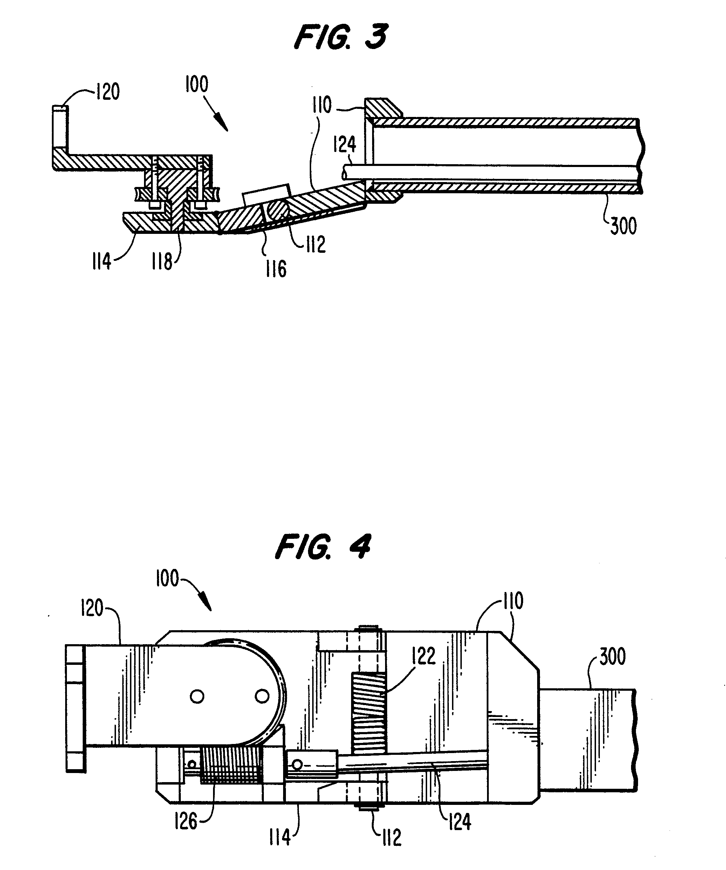

The flexible conduit 300 is attached to the end effector 100 by an end effector connector 110 as illustrated in Fig. 3. The end effector connector 110 is welded to the conduit. The connector 110 is attached, through hinge 112, to a pivot plate 114. Rotation of the pivot plate 114 in one direction past planar alignment with connector 110 is prevented by stop plate 116.

The pivot plate 114 holds a pivot 118 on which a device carriage 120 is attached. The device carriage 120 is the mounting unit for the inspection devices such as the camera or the end of the fiberscope cable. The pivot plate 114 is held coplanar with the connector 110 by a spring 122, as illustrated in Fig. 4. The hinge 112 and spring 122 allow the end effector to be bent around the curve in the deflector assembly 200 during insertion and yet return to the fully extended position after insertion. The orientation of the drive carriage 120 is controlled by a control cable 124 through a device control assembly 126. The device control assembly 126 includes a worm attached to control cable 124 engaging the worm gear, attached to the device carriage 120 to rotate the device carriage around pivot 118. Thus, the device carriage 120 can aim the inspection device such as the camera in several directions. The edges of the end effector 100 that could get caught on protruding objects in the steam generator and on the deflector assembly 200 are bevelled to provide angled sliding surfaces for surmounting such obstacles.

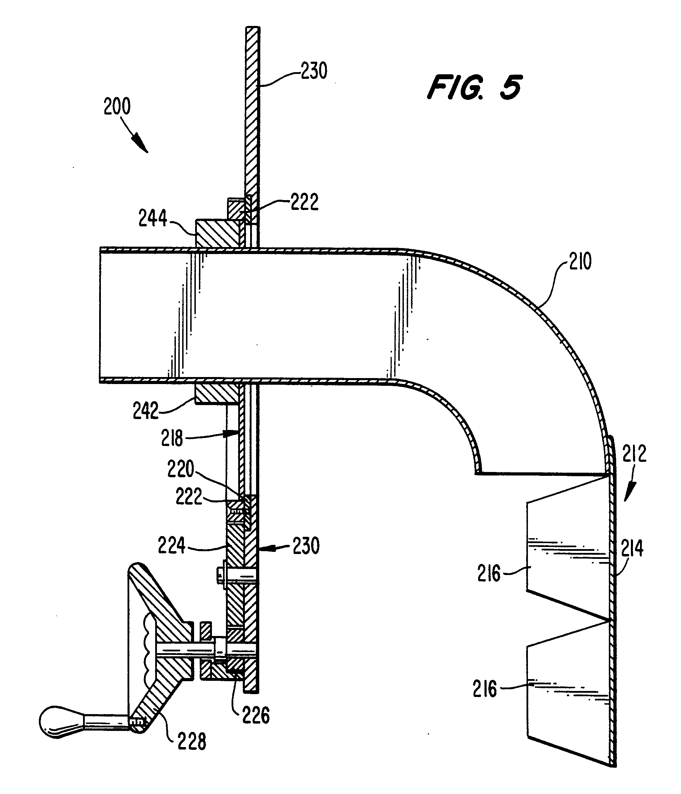

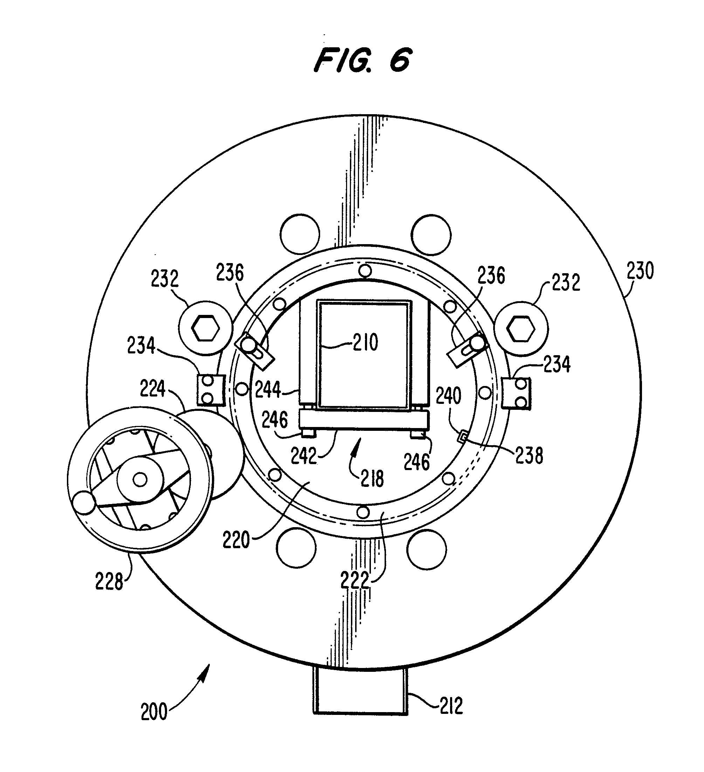

The end effector assembly 100 attached to the conduit 300 is inserted into the steam generator through the deflector assembly 200 depicted in Figs. 5 and 6. The end effector 100 is inserted into a metal deflector channel 210, and is forced in a direction perpendicular to the insertion direction by the curve of the channel 210. An extension 212 of the channel 210 provides lateral support for the end effector 100 and conduit 300 when the deflector channel 210 is oriented to insert the end effector 100 diagonally. The extension 212 includes a flexible back surface 214 of, for example polyolefin flexible hinges and U-shaped channel cutouts 216 which allow the extension 212 to be bent while inserting same. The deflector channel 210 is offset from the handhole center and slidably mounted in a deflector mount 218. The deflector mount 218 is attached to a metal bearing plate or ring 220 which includes a ring gear 222 (Fig. 6). The ring gear 222 is rotated by spur gears 224 and 226 coupled to hand operated rotation wheel 228. The ring gear 222 is mounted in the bearing plate 220 which is attached to deflector mounting plate 230 and the ring gear 222 turns or slides in ring gear retainers 234. The ring gear 222 is bolted to the bearing plate 220 which rotates in a counterbore in plate 230. The bearing plate 220 is turned with ring gear 222 by a tab 238 plate 218 and a cutout 240 on the mounting plate 220. The releasable attachment of plate 218 to the ring gear 222 allows the bearing plate 220, channel 210 and extension 212 to be removed from the deflector assembly 200. That is, plate 218 removably abuts plate 220 using clamps 236 and plate 220 is held in place by retainers 234. The ability to remove the deflector channel 210 allows the deflector to be inserted into the cavity between the tube wrapper 14 and steam generator shell 16. A clamp plate 242 is attached to a clamp 244 by threaded bolts. The clamp 244 is welded to plate 218 and the clamping structure allows the deflector 210 to be slid into and out of the handhole 18 and to be fixed in position when desired. The rotation of handle 228 transmits a rotational force through the spur gears 226 and 224 to ring gear 222. Since the ring gear is attached via the mounting plate 220 and mount 218 to the deflector 210, the deflector is rotated whenever handle 228 is turned. Thus the deflector channel 210 can be rotated to guide the end effector 100 and conduit 300 in a preferred diagonal direction.

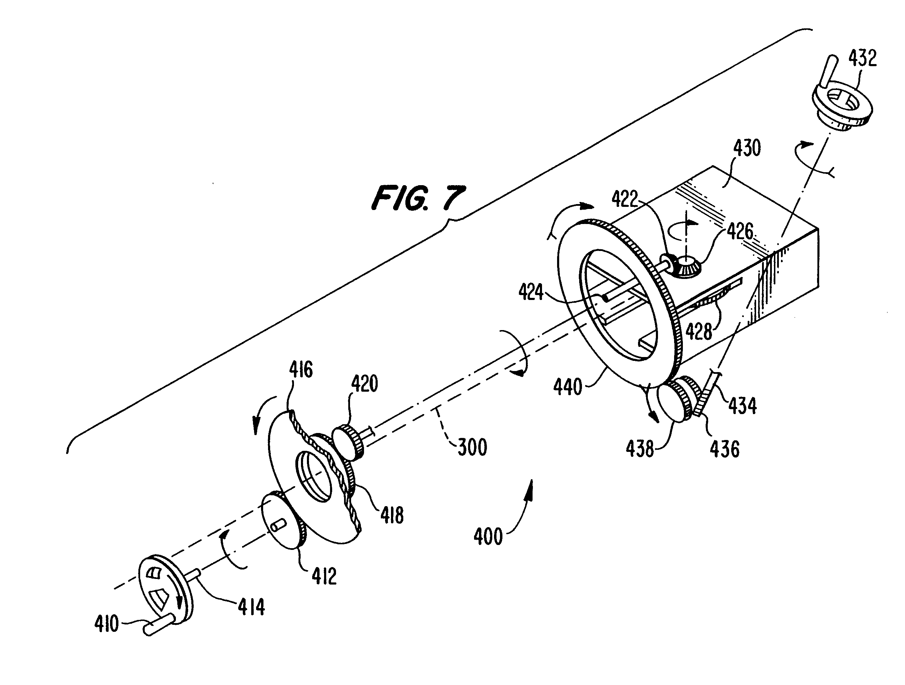

Fig. 7 illustrates the components of drive assembly 400 which provide the axial movement and rotation of the conduit 300. The arrow without a tail depicts motion which causes axial movement of the conduit 300 and the arrow with a tail indicates movement which provides rotation of the conduit 300. During axial movement, the conduit axial drive handle 410 transmits motion to spur gear 412 through shaft 414. The spur gear 412 rotates outer ring gear 416 attached to inner ring gear 418. The inner ring gear 418 drives spur gear 420 which transfers motion to pinion gear 422 through shaft 424. The pinion gear 422 rotates bevelled gear 426 attached to a friction conduit drive roller (not shown). The bevelled gear is also attached to roller spur gear 428 which transfers movement to a second drive roller (not shown) through another identical roller spur gear (not shown). The drive rollers frictionally move the conduit through ring gears 416 and 418 and through drive box 430.

Rotation of the axial drive handle 410 in one direction causes movement of the end effector and conduit 300 into the steam generator and rotation in the opposite direction pulls the conduit 300 and end effector assembly 100 out of the steam generator. Ring gears 416 and 418 serve as idler gears which permit handle 410, which remains fixed in space, to transmit power to shaft 424. For any rotational position of shaft 424, the handles 410 and 432 remain fixed in space permitting drive motors to replace handles 410 and 432 while preventing drive motor control cables from becoming entangled with conduit 300.

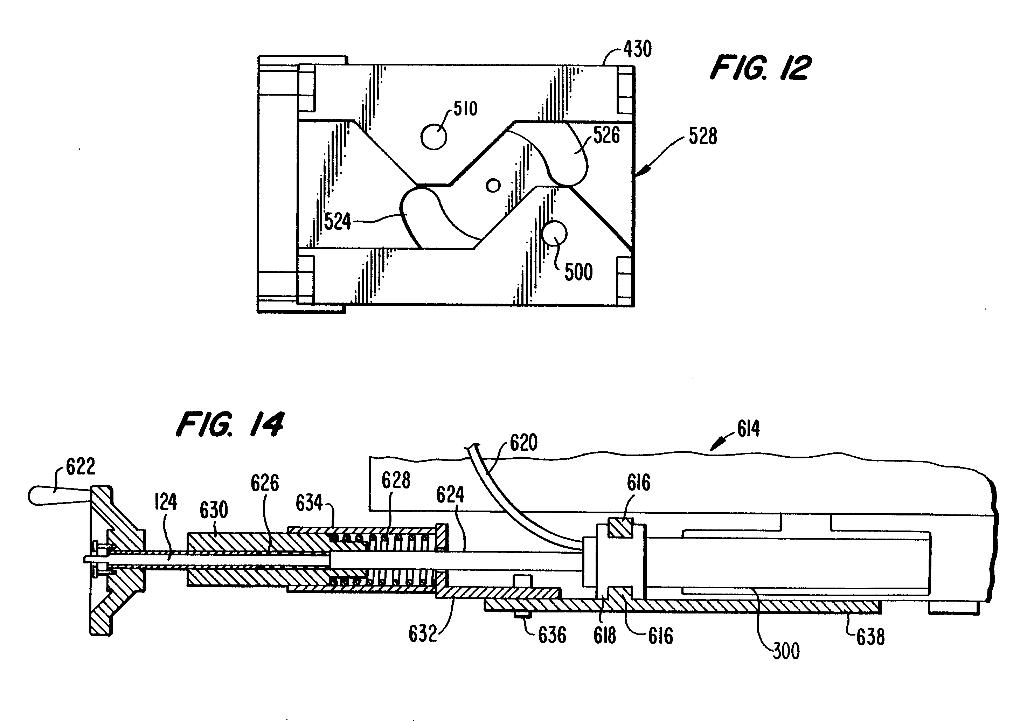

During rotational movement of the conduit 300, rotation drive handle 432 transfers rotation through shaft 434 to worm gear 436. The worm 436 interfaces with worm gear 437 which is coupled to spur gear 438 by a shaft 439 and transfers motion to ring gear 440. The ring gear 440 is fixed to the drive box 430 by screws. The use of a worm 436 in engagement with worm gear 437 prevents rotation drive handle 432 from being counter-rotated whenever axial drive handle 410 is rotated. That is, the use of worm 436 allows the rotational position of the effector 100 and conduit 300 to be maintained while driven axially. The drive box 430 also includes a slot, shown in greater detail in Fig. 12, which allows the conduit to be easily threaded through the drive and friction rollers.

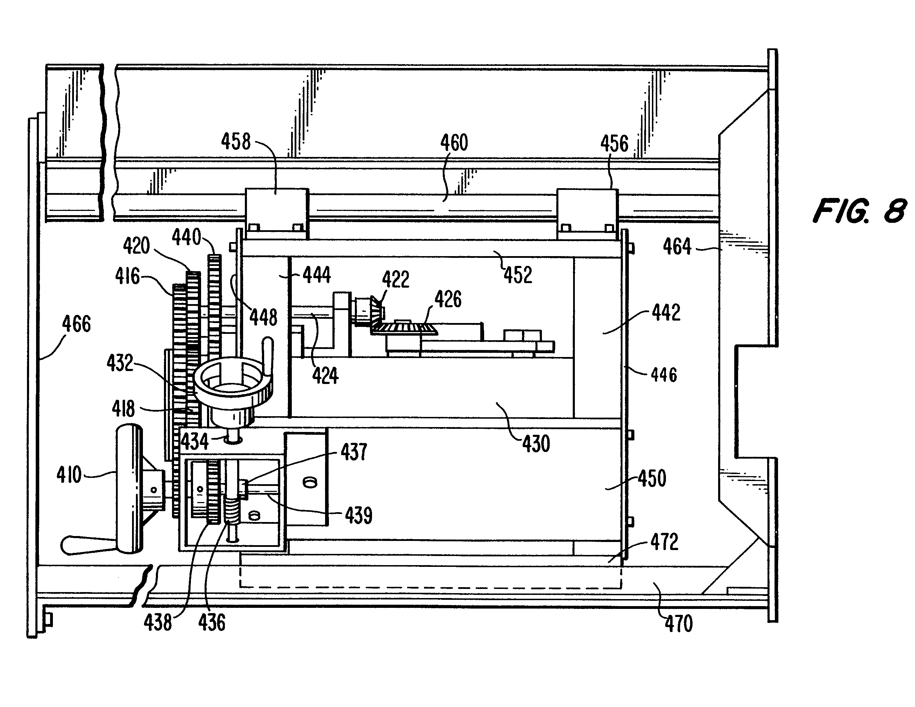

Fig. 8 provides a more detailed side view of the drive assembly 400 first depicted in Fig. 2. The drive box 430 includes race roller wheels (not shown) which allow the drive box to rotate in drive box races 442 and 444. The drive box is prevented from axially moving in the races 442 and 444 by end plates 446 and 448. The races 442 and 444 are held separate and in alignment with the race roller wheels on the drive box 430 by separator plates 450-454. The top separator plate is attached to rail slides 456 and 458 which allow the assembly to slide on slide rail 460. The slide rail 460 is carried by beam 462 attached to slide rail 460. The beam 462 is attached to a rack assembly which includes a steam generator end plate 464 which couples to the steam generator. The beam 462 is also attached to end plate 466. The rack assembly also includes a guide channel 470 below the drive assembly. The guide channel 470 engages guide 472 attached to the end plates 446 and 448 and prevents rotation of the races 442 and 444, separator plates 450, 452 and 454 and slide rail 460 while allowing the drive assembly to slide axially on slide rail 460. The ability to move the drive assembly away from the steam generator will allow the end effector 100 to be removed from the steam generator without completely removing the drive assembly. A sufficient slide space must be provided so that the end effector 100 can be completely remove from the steam generator. In addition, the slide space should be sufficient to manipulate the deflector channel 210 through the handhole 18. The drive assembly also includes appropriate mounting plates and boxes for affixing the axial and rotational gear assemblies to the separator plates 450 and 452.

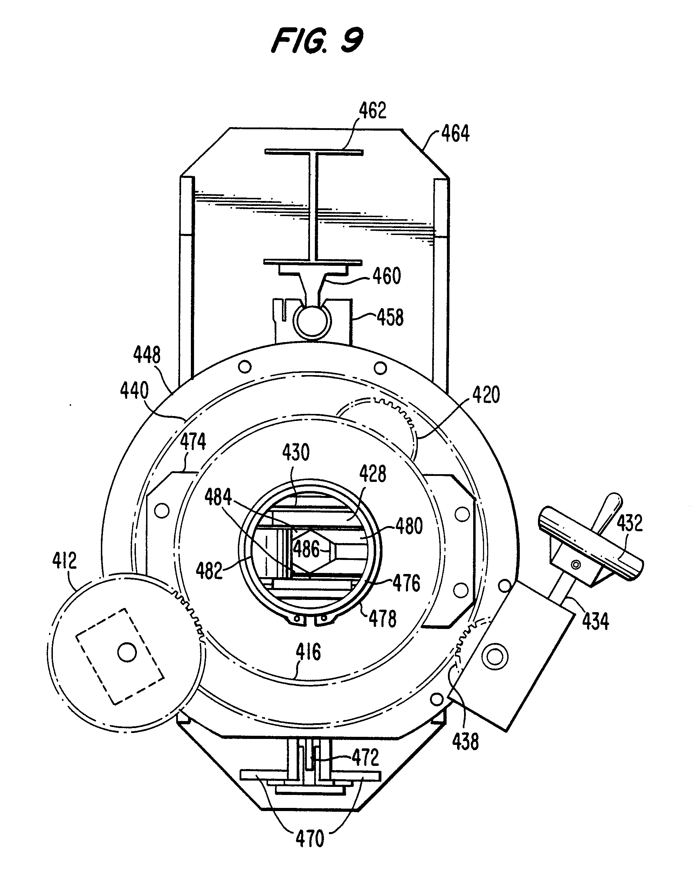

Fig. 9 provides an end view of the drive assembly illustrating attachment of ring gear 440 to the plate 474. The outer ring gear 416 and inner ring gear 418 are held on a hollow shaft 476 by a retainer 478. The hollow shaft is integral with plate 474 and plate 474 is bolted to ring gear 440. The conduit 300 passes through the shaft 476 and between a first drive roller 480 and a friction roller 482, and between a second drive roller 484 and a second friction roller 486. Each pair of a drive and friction roller are designed to contact the conduit 300 at three equally spaced circumferential points to prevent unbalanced compressional forces from being applied to the conduit 300. The two pairs then provide six different conduit symmetrical contact points. The drive and friction rollers are polyurethane.

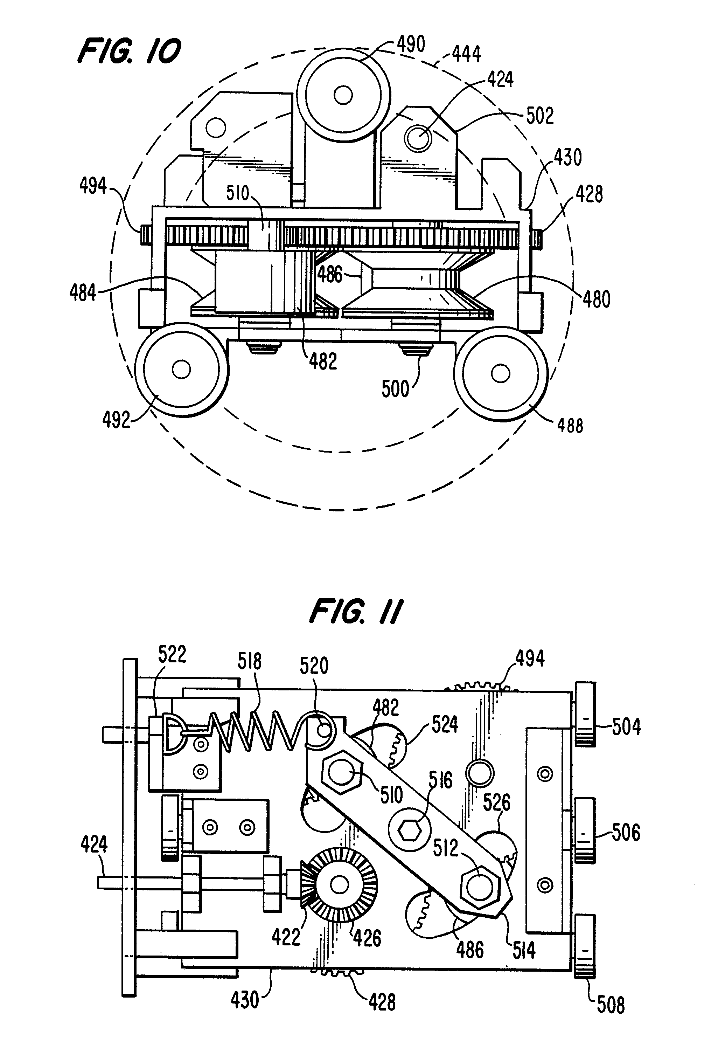

Fig. 10 is an end view of the drive box assembly showing the race rollers 488-492, also made of plastic, which roll in race 444. This figure also illustrates the relationship between the second drive roller 484 and the spur gear 494 affixed to the second drive roller 484 and driven by roller spur gear 428. This view also illustrates how the flexible conduit 300 passes between a first drive roller 480 and a first friction roller 482 and between a second drive roller 484 and a second friction roller 486. The friction roller assembly includes a shaft 510 about which the friction roller 482 rotates. The roller 480 rotates on shaft 500. Also illustrated is the shaft support 502 through which the axial drive shaft 424 passes.

Fig. 11 illustrates a top view of the drive box assembly showing the rear race rollers 504-508 attached to the rear of drive box 430. The friction rollers 482 and 486 are mounted on friction roller shafts 510 and 512 which couple the friction rollers 482 and 486 to a friction roller rocker arm 514. The friction roller shafts 510 and 512 engage the rocker arm via threads which allow proper alignment with the conduit. The rocker arm 514 pivots around pivot shaft 516 affixed to box 430, so that the flexible conduit 300 is constantly pressed into engagement with drive rollers 480 and 484. The tension is maintained by a tension spring 518 coupled between a rocker arm pin 520 attached to the rocker arm 514 and a spring retaining plate 522 that includes a spring loop. The friction roller shafts 510 and 512 pivot in pivot slots 524 and 526 that provide space for sufficient pivoting movement to allow complete disengagement of the conduit from the drive rollers, so that the conduit can be removed and/or inserted in the drive box assembly through a cable insertion slot 528 illustrated in Fig. 12 which is a bottom view of the drive box 430.

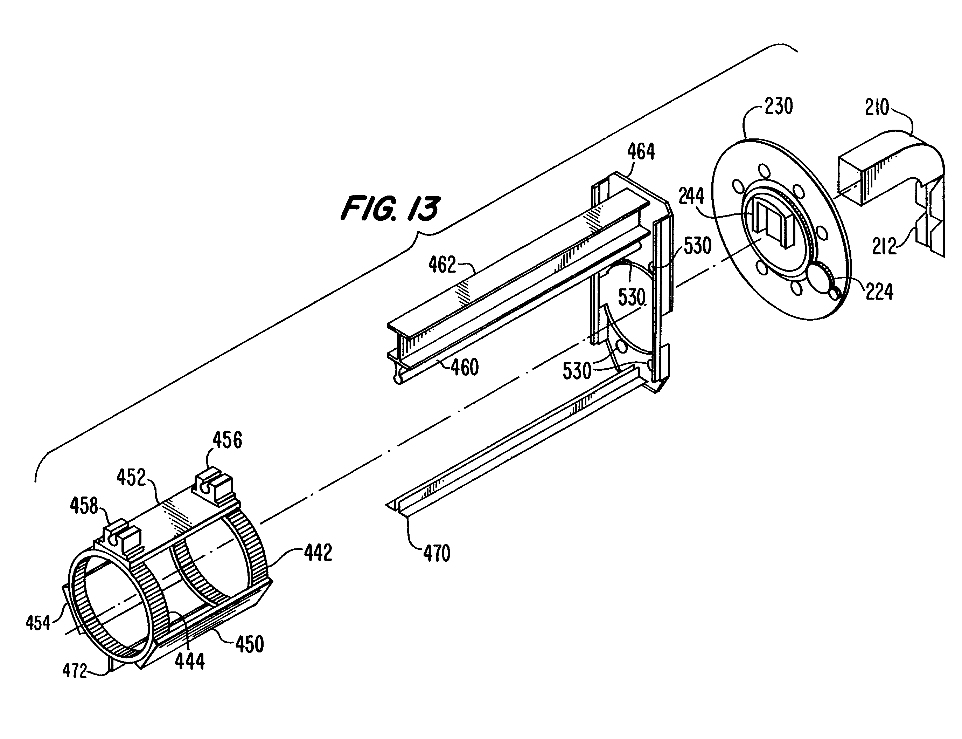

Fig. 13 illustrates an exploded view of the relationship between the frame and drive box carrying components of the present invention and should be viewed together with Fig. 7. In particular, Fig. 13 illustrates the relationship between rack assembly mounting holes 530 and corresponding holes in deflector mounting plate 230 through which bolts are used to attach the drive box assembly to the cover plate holes of the handhole 18. This figure also illustrates the third separator plate 454 and its relationship to the other separator plates 450 and 452. The drive box 430 rotates in the races 442 and 444 while the races 442 and 444 slide on slide 460.

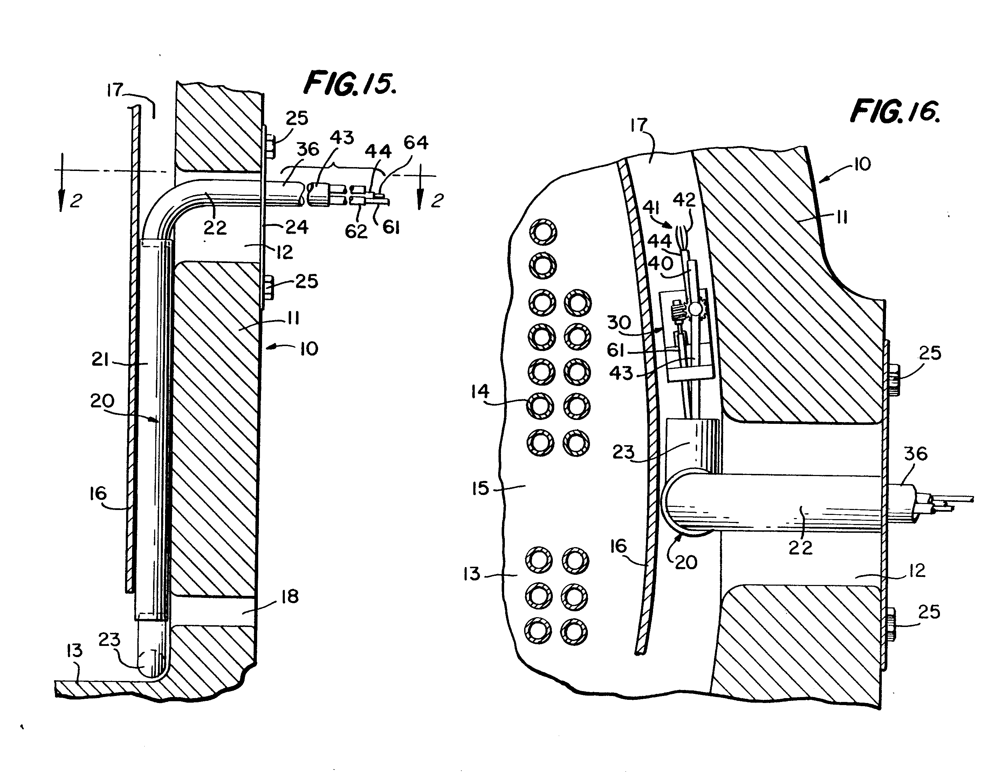

Returning to Fig. 2, the conduit basket assembly 600 includes a coiling winding frame 610 which forces the conduit 300 into a spiral coil inside the basket frame 612. A conduit tension assembly 614, which maintains tension on the cables within the conduit 300, is illustrated in more detail in Fig. 14. The tension assembly 614 includes a conduit mount 616 which engages friction fit mounting couple 618 attached to conduit 300. Extending from the conduit 300 is a smaller conduit 624 from which end effector control cable 124 emerges a fiberscope cable 620 through which the operator can view the interior of the steam generator. The end effector control cable 124 is attached to an end effector control handle or hand wheel 622 and transmits rotational force directly to the control cable 124. A spring 626 maintains tension on the control cable 124. The smaller conduit 624 is kept under tension by a spring 628 that applies a separation drive force between handle support 630 and slide 632. The slide 632 is adjustable by adjusting slide holding nut and bolt combination 636. The entire tension assembly is attached to a basket mounting plate 638 coupled to the basket 612.

Shown in Figs. 15 and 16 is a portion of a conventional nuclear steam generator, generally indicated by the numeral 10, having an outer cylindrical shell 11 provided with an opening 12, generally referred to as a handhole, located approximately 18 inches from the tube sheet 13 adjacent the bottom of the shell. Generally the handhole is only six inches in diameter. As shown in Fig. 16, the steam generator further includes a plurality of closely spaced vertical tubes 14 supported by and extending upwardly from the tube sheet 13. The vertical tubes 14 are associated by pairs with a U-bend at the top (not shown) so as to straddle two sides of an aisle 15 extending centrally across the shell. The tubes 14 are surrounded by a wrapper barrel 16 spaced approximately two inches from the interior wall of the shell 11 to form an annulus 17, therewith. As shown in Fig. 15, the wrapper barrel 16, and consequently the annulus 17, extend downwardly to a point six inches above the tube sheet 13. As further shown in Fig. 15 an inspection hole 18 is provided below the handhole 12 in the shell and is located at a point just above the tube sheet 13.

As shown in Figs. 15 and 16, the search and retrieval device of the present invention includes a guide tube, generally indicated by the numeral 20, having a straight main segment 21 and an upper segment 22 bent at a right angle to the main segment. The guide tube further includes a lower segment 23 also bent at a right angle to the main segment and extending in a direction rotated 90° from the direction of the upper segment 22. The lower segment 23 of the guide tube 20 rests on and is parallel to the surface of the tube sheet 13. The upper segment 22 and the lower segment 23 may be constructed as separate parts from the main segment 21 of the guide tube 20 to facilitate insertion of the guide tube into the steam generator. The guide tube is secured at its upper end to the shell 11 by means of a guide plate 24 fastened to the shell by suitable means such as bolts 25.

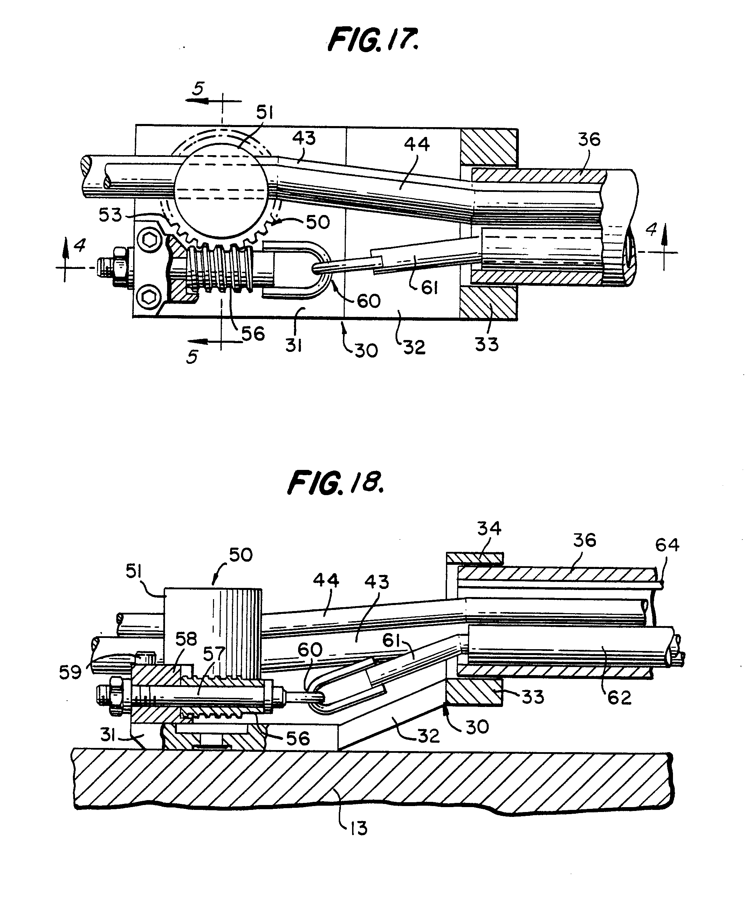

Referring particularly to Figs. 17 and 18, the search and retrieval device also includes a sled, generally indicated by the numeral 30, which comprises a flat front plate 31, an intermediate plate 32 angled upwardly at approximately a 30° angle and a back plate 33 attached to the intermediate plate and positioned in a plane above but parallel to the plane of the front plate 31. Mounted on the back plate 33 is an upstanding bracket 34 for receiving and securely holding the end of a flexible steel tube 36 which extends from the back plate 33 of the sled 30 up through the guide tube 20 to the outside of the shell of the steam generator. Preferably, the flexible tube 36 has a diameter of one inch. While the flexible tube 36 preferably is constructed of steel, it also may be constructed of other suitable materials which are flexible enough to permit insertion through the guide tube 20 and the annulus 17 but yet is sufficiently rigid to permit pushing of the sled 30 around the periphery of the shell 11 on the tube sheet 13.

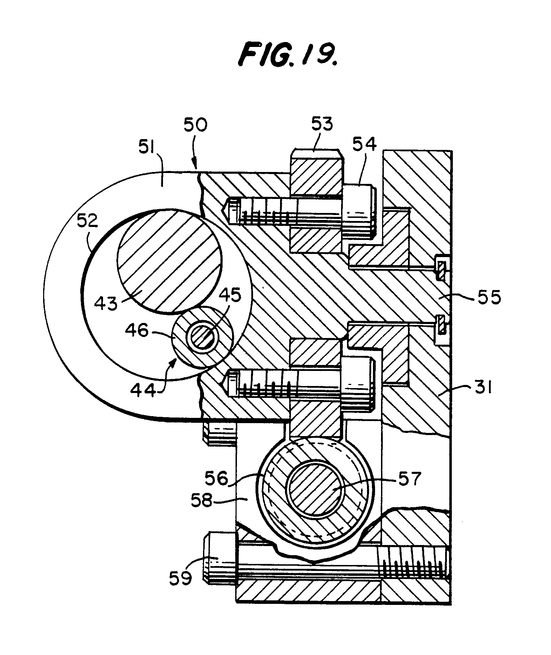

An inspection probe 40 and a gripper 41 are associated with the sled 30 as most clearly shown in Fig. 16. The probe may be of any suitable type which permits inspection of the surface of the tube sheet 13. For example, the probe may comprise either a fiberscope or a miniature TV camera and preferably has a diameter of 3/8 inch. The gripper may be of any type suitable for picking up small objects from the surface of the tube sheet. The gripper shown in Fig. 16 has a plurality of prongs 42 which may be closed and opened to grasp and release objects. The probe 40 is connected to a flexible probe cable 43 which extends from the probe back through the flexible tube 36 to the outside of the steam generator. The gripper 41 is connected to a flexible gripper shaft 44 which also extends back through the flexible tube 22 to the outside of the steam generator. The gripper shaft 44 preferably has a diameter of 1/4 inch. As shown in Fig. 19, the gripper shaft 44 consists of an inner shaft 45 slidably received within an outer shaft 46. The inner shaft 45 is connected to the end of the gripper 41 whereby when the inner shaft is pushed forwardly the gripper prongs 42 are opened and when the inner shaft 45 is pulled backwardly the prongs 42 close to grasp an object. The probe cable 43 and the gripper shaft 44 constitute control means for the probe 40 and the gripper 41.

Adjusting means, generally indicated by the numeral 50, are mounted on the sled 30 for changing the operating positions and direction of the probe and the gripper. The adjusting means 50 is comprised of a rotatable turret 51 having a circular passageway 52 extending through the upper portion thereof and a worm wheel 53 fixedly attached to the lower portion thereof by any suitable means such as bolts 54 as shown in Fig. 19. The turret 51 is rotatably attached to the front plate 31 of the sled by shaft 55. A worm gear 56 is rotatably mounted on shaft 57 secured by bracket 58 to the front plate 31 of the sled 30. Bracket 58 is mounted to front plate 31 by any suitable means such as bolts 59. The worm gear 56 meshes with worm wheel 53 whereby rotation of the worm gear causes the worm wheel 53 and consequently turret 51 to rotate. The probe cable 43 and the gripper shaft 44 freely pass through the circular passageway 52 of the turret 51 so that they may slide therethrough.

Attached to the end of the shaft 57 on which worm gear 56 is mounted is a universal mechanism 60 which in turn is attached to the end of an actuator cable 61 rotatably received within an outer cable 62 which extends through a flexible tube 36 to the outside of the steam generator as shown in Figs. 18 and 19. Actuator cable 61 rotates within outer cable 62 in a manner similar to a speedometer cable. Rotation of cable 61 causes the worm gear to also rotate or turn.

An emergency pull wire 64 also extends through the flexible tube 36 and is welded to the flexible tube at each end thereof. The emergency pull wire 64 extends outwardly from the outer end of the flexible tube whereby if the flexible tube 36 becomes stuck, the emergency pull wire will prevent unraveling of the flexible tube 36 while the tube is being pulled out.

In operation of the search and retrieval device of the present invention, the outer end of the flexible tube 36 is initially inserted through the guide tube 20 and out through the end of the upper segment 22 thereof. The sled 30 and the guide tube 20 having the flexible tube 36 passing therethrough are then inserted through the handhole 12 until the sled 30 is positioned on the surface of the tube sheet 13 and the lower segment 23 of the guide tube 20 is parallel to the surface of the tube sheet. An operator of the device may view the guide tube 20 through the inspection hole 18 to ensure that the guide tube is positioned correctly.

Once the sled and the associated components mounted thereon are in position on the periphery of the tube sheet, the probe may be activated to search for any loose objects on the surface of the tube sheet. The sled is moved along the periphery of the tube sheet by pushing the flexible tube through the guide tube 20. Pushing or pulling on the flexible tube 36 causes the sled to slide over the surface of the tube sheet. The sled may be stopped at any point and the turret 51 rotated by turning or rotating actuator cable 61 in order to turn the probe and the gripper inwardly to face the rows of the tubes 14. Both the probe cable 40 and the gripper shaft 44 then may be pushed by an suitable means outside of the shell of the steam generator whereby the probe cable 43 and the gripper shaft 44 slide through the circular passageway 52 of the turret to extend the probe 40 and the gripper 41 to a position among the tubes. When an object to be removed is located by use of the probe, the gripper shaft is then pushed until the gripper comes in contact with the object whereupon the inner shaft 45 of the gripper shaft 44 is pulled to close the prongs 42 and grasp the object. The entire sled assembly is then removed from the steam generator and the object released from the gripper. The above-described operation is then continually repeated until the entire tube sheet has been inspected and cleaned.

The flexible tube 36 may be pushed through the guide tube 20 either manually or by automatic means (not shown) located outside the shell of the generator. In addition, the rotation of the actuator cable 61 and the pushing and pulling of the probe cable 43 and the gripper shaft 44 may also be done either manually or by suitable automatic means (not shown) located outside the shell of the generator.

It is apparent from the foregoing that many advantageous features are provided by the present invention over the prior art. A device for searching and retrieving objects in the small spaces between the tubes on a tube sheet of a nuclear steam generator is disclosed which is relatively simple and economical in construction and which may be readily maneuvered into and through the small spaces present in a steam generator to retrieve objects which have been dropped on the tube sheet and have to be removed. The present invention permits such removal without having to dismantle any part of the steam generator to provide access to the interior portions thereof.

Throughout the above-described invention, aluminum may be used as a component material for low overall weight.

The many features and advantages of the present invention are apparent from the detailed specification and thus it is intended by the appended claims to cover all such features and advantages of the invention which fall within the true spirit and scope thereof. Further, since numerous modifications and changes will occur to those skilled in the art, it is not desired to limit the invention to the exact construction and operation illustrated and described, and accordingly all suitable modifications and equivalents may be resorted to, falling within the scope of the invention. For example, rather than use manually controllable handles for controlling the motions within the drive system, electronically controllable positioning motors can be used so that the operator viewing the interior of the steam generator can control position. The end plate 464 by which the drive assembly 400 is attached to the handhole 18 could be hinged to allow the drive assembly 400 to swing away from the handhole 18 rather than slide away. The system of the present invention is also suitable for inspecting the tube lane created in the center of the U-shaped tube bundle 12.

## Claims

1. A drive system for a remotely operated inspection probe device for inspecting an inspection area, and retrieving objects in a steam generator having an outer cylindrical shell, a horizontal tube sheet adjacent the lower end of said shell, a bundle of vertical tubes supported by said tube sheet, a wrapper barrel surrounding said tubes extending from the upper portion of said shell downwardly to a predetermined point above said tube sheet to form an annulus inside said shell and an opening through said shell to said system comprising:

a flexible conduit attached to the inspection probe device;

guide means for guiding the inspection probe device and flexible conduit into the inspection area; characterized by

motion control means for controlling the movement of the flexible conduit and inspection device into and out of the inspection area, and for controlling orientation of the inspection probe device by rotating the flexible conduit; and

conduit collection and inspection device control means for respectively collecting the flexible conduit and controlling the inspection device.

2. A system as in claim 1 wherein said inspection probe device comprises:

a. a sled adapted to be passed through said shell opening and down through said annulus to said tube sheet;

b. a flexible tube connected at one end to said sled and having its other end extending out through said shell opening, said flexible tube being of sufficient length to be freely movable into and out of said shell opening to move said sled along said tube sheet;

c. a probe and a gripper associated with said sled for searching and retrieving objects;

d. adjusting means on said sled for changing the operating positions of said probe and said gripper; and

e. control means outside of said shell extending through said flexible tube for operating said probe, said gripper and said adjusting means.

3. A system as recited in claim 1, wherein said guide means comprises:

a removable deflector through which the flexible conduit and inspection device travel;

a bendable deflector extension coupled to said removable deflector, and providing support to the flexible conduit and inspection device when the removable deflector is oriented non-vertically; and

a deflector rotation assembly coupled to said removable deflector and rotating the removable deflector and bendable deflector extension.

4. A system as recited in claim 3, wherein said guide means further comprises:

a deflector clamp preventing sliding movement of the removable deflector; and

a removable deflector mounting plate fixed to said deflector clamp, and

wherein said deflector rotation assembly comprises:

a rotatable ring gear engaging said removable deflector mounting plate; and

a gear drive unit engaging said rotatable ring gear.

5. A system as recited in claim 1, wherein said motion control means comprises drive means, spatially fixed with respect to said guide means axially and rotationally, for providing the rotational and axial motion to said flexible conduit.

6. A system as recited in claim 1, wherein said conduit motion control means comprises:

a rotatable drive box gripping the flexible conduit and providing rotational and axial motion to the flexible conduit;

a race in which the rotatable drive box rotates; and

a slide bar on which said race slides.

7. A system as recited in claim 6, wherein said conduit motion control means further comprises:

a beam carrying said slide bar; and

a guide channel coupled to said beam, and

wherein said race includes a guide sliding in said guide channel.

8. A system as recited in claim 7, wherein said rotatable drive box comprises:

an axial gear drive train;

a slotted drive box;

a drive roller coupled to the axial gear drive train and fixed in said slotted drive box;

a friction roller forcing the flexible conduit into engagement with said drive roller and fixed in said slotted drive box; and

a rotational gear drive train rotating the slotted drive box and including means for preventing rotation of the slotted drive box when said axial gear drive train is in motion.

9. A system as recited in claim 8, wherein said axial gear drive train comprises:

a bevel gear coupled to said drive roller and fixed to said slotted drive box;

a pinion gear engaging said bevel gear;

a shaft held by said slotted drive box and coupled to said pinion gear;

a ring spur gear coupled to said shaft;

a ring gear engaging said ring spur gear and through which said flexible conduit passes;

a drive spur gear engaging said ring gear; and

a drive shaft coupled to said drive spur gear and in a fixed spatial position.

10. A system as recited in claim 8, wherein said rotational gear train comprises:

a ring gear attached to said slotted drive box and through which said flexible conduit passes;

a spur gear engaging said ring gear;

a worm gear coupled to said spur gear;

a worm engaging to said worm gear; and

a drive shaft coupled to said worm and in a fixed spatial position.

11. A system as recited in claim 8, wherein said rotatable drive box further comprises:

a tension bar coupled to said friction roller;

a spring coupled to said tension bar and providing a flexible conduit engagement force through said tension bar to said friction roller.

12. A system as recited in claim 1, wherein said inspection device is controlled by a rotatable cable, and

wherein said conduit collection and inspection device control means comprises:

a collection basket; and

tensioning and control means for holding the flexible conduit and providing rotational control of the rotatable cable.

FIG. 1

FIG. 2

0230377

## FIG. 3

## FIG. 4

FIG. 5

# FIG. 6

FIG. 7

FIG. 8

458  460  456
464
420 440
416
444
422
466
452
448
426
442
432
424
446
418
434
430
410
437
450
439
472
438  436
470

0230377

**FIG. 9**

0230377

**FIG. 10**

**FIG. 11**

*FIG. 12*

510

526

528

524

430

500

*FIG. 14*

622

124

630

626

634

628

624

632

636

618

616

616

300

638

620

614

0230377

**FIG. 13**

FIG.15.

FIG.16.

0230377

**FIG.17.**

**FIG.18.**

## FIG.19.